# EUROPEAN PATENT SPECIFICATION

(11) **EP 3 880 003 B1**
(45) Date of publication and mention of the grant of the patent: **29.07.2026**
(21) Application number: 18804589.2
(22) Date of filing: 16.11.2018
(51) Int. Cl.: A23L 27/10

(54) **DRY ONION PREPARATION II**
TROCKENE ZWIEBELZUBEREITUNG II
PRÉPARATION D'OIGNON SEC II

(43) Date of publication of application: 22.09.2021
(73) Proprietor: Symrise AG, 37603 Holzminden Niedersachsen (DE)
(72) Inventor: SABATER-LUENTZEL, Christopher, 37603 Holzminden (DE); KOCH, Jens, 37632 Escherhausen (DE); BLUME, Jochen, 59348 Lüdinghausen (DE); HILLE, Matthias, 36791 Boffzen (DE); KOPPE, Volkmar, 37671 Höxter-Stahle (DE); GROHMANN, Lars, 37603 Holzminden (DE); ABRAHAMSE, Salomon Leendert, 3133 AT Vlaardingen (NL); ACHARYA, Parag, 3133 AT Vlaardingen (NL); BATENBURG, Amir Maximilian, 3133 AT Vlaardingen (NL); VANDER STAPPEN, Michel, 3133 AT Vlaardingen (NL)
(74) Representative: Eisenführ Speiser
(86) International application number: PCT/EP2018/081555
(87) International publication number: WO 2020/098952

(56) References cited:
- WO-A1-2015/156380
- SINHA N K ET AL: "SUPERCRITICAL CARBON DIOXIDE EXTRACTION OF ONION FLAVORS AND THEIR ANALYSIS BY GAS CHROMATOGRAPHY-MASS SPECTROMETRY", JOURNAL OF AGRICULTURAL AND FOOD CHEMISTRY, AMERICAN CHEMICAL SOCIETY, US, vol. 40, no. 5, 1 May 1992 (1992-05-01), pages 842 - 845, XP000275566, ISSN: 0021-8561, DOI: 10.1021/JF00017A027
- J. L. WU ET AL: "Volatile Flavor Compounds from Shallots", JOURNAL OF FOOD SCIENCE, vol. 47, no. 2, 1 March 1982 (1982-03-01), Hoboken, USA, pages 606 - 608, XP055230218, ISSN: 0022-1147, DOI: 10.1111/j.1365-2621.1982.tb10133.x
- CHOI SO MANG ET AL: "Volatile composition and sensory characteristics of onion powders prepared by convective drying", FOOD CHEMISTRY, ELSEVIER LTD, NL, vol. 231, 23 March 2017 (2017-03-23), pages 386 - 392, XP029992230, ISSN: 0308-8146, DOI: 10.1016/J.FOODCHEM.2017.03.129
- TOKITOMO YUKIKO: "Flavor constituents of roasted onions of different cultivars, and comparison of their aroma patterns", JOURNAL OF THE JAPANESE SOCIETY FOR FOOD SCIENCE AND TECHNOLOGY, vol. 42, no. 12, 1995, pages 1003 - 1011, XP009514335, ISSN: 0029-0394
- MANS. BOELENS ET AL: "Volatile flavor compounds from onion", JOURNAL OF AGRICULTURAL AND FOOD CHEMISTRY, vol. 19, no. 5, 1 May 1971 (1971-05-01), pages 984 - 991, XP055206161, ISSN: 0021-8561, DOI: 10.1021/jf60177a031
- WU J L ET AL: "VOLATILE FLAVOR COMPOUNDS FROM SHALLOTS ALLIUM-CEPA", JOURNAL OF FOOD SCIENCE, vol. 47, no. 2, 1982, pages 606 - 608, XP002792789, ISSN: 0022-1147
- BUTZ P ET AL: "Ultra-high pressure processing of onions: chemical and sensory changes", LWT- FOOD SCIENCE AND TECHNOLOGY, ACADEMIC PRESS, UNITED KINGDOM, vol. 27, no. 5, 1 January 1994 (1994-01-01), pages 463 - 467, XP002090373, ISSN: 0023-6438, DOI: 10.1006/FSTL.1994.1093

## Description

The present invention relates to new onion flavour compositions and the use of such new onion flavour compositions to impart and/or enhance an onion flavour in a preparation for nourishment or pleasure, or in a semi-finished product for the production of a preparation for nourishment or pleasure.

Further aspects of the present invention or in connection therewith as well as preferred embodiments will be described below as well as in the attached claims.

Due to their versatile taste profile, onions (*Allium cepa*) are widely used as ingredient in many different food products. To impart or enhance an onion taste and/or smell, mostly onion flavour compositions, including an onion-based powder, juice, concentrate, oil, pomace or puree, are used.

In diverse food products, a detailed taste profile of onions, authentically imparting or enhancing a culinary taste and/or smell known from the kitchen, e.g. roasted and/or deep fried onions, is required. Therefore, onions are often heated to create such notes. Heating processes give rise to a complex composition of different compounds, which in part arise by autoxidation, thermal decomposition or initiation of Maillard-type compounds of some of the previously contained compounds.

Tokitomo Yukiko: "Flavor constituents of roasted onions of different cultivars, and comparison of their aroma patterns", JOURNAL OF THE JAPANESE SOCIETY FOR FOOD SCIENCE AND TECHNOLOGY, vol. 42, no. 12, 1995, pages 1003-1011, describes flavor constituents of roasted onions of different cultivars, and compares their aroma patterns.

Due to the complexity of the obtained compositions, the manufacture of an onion flavour composition imparting or enhancing a distinct culinary taste and/or scent profile is rather difficult. With the currently existing onion flavour compositions, several taste and/or scent profiles cannot yet be obtained in a sufficient and/or authentic intensity as desired.

It was thus the primary object of the present invention to provide new onion flavour compositions which impart and/or enhance such an authentic taste profile of deep fried onions. Further objects of the present invention or in connection therewith become apparent when reading the specification of the present invention and its aspects and preferred embodiments as described herein.

The primary object of the present invention is achieved by an onion flavour composition, preferably in form of a powder, comprising
a) all substances selected from group A consisting of 2-Hexyl-5-methyl-3(2H)-furanone, Methylpropyl disulphide, Methylpropyl trisulphide, 3,4-Dimethylthiophene and 2-Methyl-2-pentenal;
b) the substances selected from group B consisting of Furfural, Cis-Methyl-1-propenyl disulfide and 5-Methylfurfural,

wherein the ratio of the sum of the concentrations by weight of the substances from component a), related to the total composition, and the sum of the concentrations by weight of the substances from component b), related to the total composition, or, in other words, wherein the ratio of the sum of the total weight of the substances from component a), related to the total weight of the composition, and the sum of the total weight of the substances from component b), related to the total weight of the composition, is higher than or equal to 2.5:1,
and wherein the sum of the concentrations by weight of the substances from component a), related to the total composition, is at least 5 mg/kg,
and wherein the sum of the concentrations by weight of the substances from component b), related to the total composition, is maximal 2 mg/kg.

Particularly, a ratio of higher than or equal to 2.5:1 is achieved if one or several of the substances of group A is/are present in rather high amounts, whereas one or several of the substances of group B is/are present in rather low amounts.

A study of Villière et al., Evaluation of aroma profile differences between sué, sautéed and pan-fried onions using an innovative olfactometric approach, Flavour (2015) 4:24 analysed the aroma profile of different types of heated onion preparations. It is reported that sulphur compounds were largely contributing to the aroma of the onion samples, especially propyl-containing di- and tri-sulphides contributed to the flavour of cooked onions. Furthermore, Furans, particularly Furfural and 2-Acetylfuran, were also detected in high amounts and seemed to be important contributors to the characteristic odour of fried products.

It was surprisingly found, however, that in the onion flavour compositions according to the invention, the sulphur compound Cis-Methyl-1-propenyldisulphide is required to be present in lower amounts compared to the other substances contained in the onion flavour compositions. Similarly, it was surprisingly found that the furans furfural, which was explicitly mentioned in Villière et al., and 5-Methylfurfural are required to be present in lower amounts than the other substances contained in the onion flavour compositions.

Furfural and 5-Methylfurfural are known to be Maillard reaction products, which are usually responsible for a fried onion flavour. It was thus surprising that these substances were required in only lower amounts in the onion flavour compositions according to the invention.

It was found that, in contrast to Cis-Methyl-1-propenyl disulphide, the sulphur compounds of group A as well as 2-Methyl-2-pentenal were required to be present in a high amount to impart or enhance an onion taste and/or smell, especially a deep fried taste and/or scent profile.

Preferred is an onion flavour composition according to the invention, wherein the sum of the concentrations by weight of the substances from component a), related to the total composition, is at least 7.5 mg/kg, at least 8 mg/kg or at least 9 mg/kg.

It is furthermore preferred that the sum of the concentrations by weight of the substances from component b) in the onion flavour composition according to the invention and related to the total composition, is maximal 1.75 mg/kg.

Onion flavour compositions usually comprise a complex composition with a high number of included substances, as during heating processes applied to onions, a variety of different substances arises. Therefore, a sum of the concentrations by weight of at least 5 mg/kg, preferably at least 7.5 mg/kg, at least 8 mg/kg or at least 9 mg/kg can already cause significant effects on the complex taste and/or scent profile, as already in these ranges the substances of group A are though present in higher amounts as many of the high number of other substances. Likewise, it is advantageous if the sum of the concentrations by weight of the substances of group B is rather low to reduce or prevent an effect on the taste and/or scent profile. Therefore, a concentration by weight of maximal 1.75 mg/kg is preferred.

Preferred is an onion flavour composition according to the invention, wherein the ratio of the sum of the concentrations by weight of the substances from component a), related to the total composition, and the sum of the concentrations by weight of the substances from component b), related to the total composition, is at least 3 : 1.

It was found that the onion taste and/or smell, particularly a deep fried taste and/or scent profile was more intense and/or authentic if high amounts of the substances of group A and simultaneously low amounts of the substances of group B were present in the flavour compositions. Higher ratios of the amount of the group A substances and the amount of the group B substances are thus advantageous for the desired taste and/or scent profile. Unlike the sulfur compound Cis-Methyl-1-propenyl disulphide, especially 3,4-Dimethylthiophene and unlike the furans Furfural and 5-Methylfurfural, especially 2-Hexyl-5-methyl-3(2H)-furanone were required to be present in a high amountto impart or enhance an onion taste and/or smell, especially a deep fried taste and/or scent profile.

An onion flavour composition according to the present invention can be - and preferably is - prepared by or producible a method comprising or consisting of the following steps:
i) providing fresh onion,
ii) providing onion juice concentrate having a Brix degree of 60 to 85, preferably a Brix degree of 65 to 80, particularly preferably a Brix degree of 70 to 75,
iii) optionally: providing vegetable oil,
iv) heating 100 parts by weight of the fresh onion and 100 to 450 parts by weight, preferably 150 to 400 parts by weight, particularly preferably 200 to 350 parts by weight, especially preferably 250 to 300 parts by weight, of the onion juice concentrate and where applicable 1 to 3 parts by weight, preferably 1.5 to 2.5 parts by weight of the vegetable oil,
   wherein the fresh onion, the onion juice concentrate and, where applicable, the vegetable oil are mixed to obtain an onion mix, preferably before heating,
v) drying the onion mix to a water content of 5 wt.-% or less, preferably 4 wt.-% or less, particularly preferably 3 wt.-% or less, based on the total weight of the onion,
vi) providing onion pomace,
vii) optionally: drying the onion pomace, preferred as described herein below,
viii) mixing 70 to 100 parts by weight, preferably 70 to 95 parts by weight of the dried onion mix obtained in step v) with 7.5 to 30 parts by weight, preferably 8 to 25 parts by weight, particularly preferably 10 to 20 parts by weight of the onion pomace provided in step vi) or obtained in step vii) and milling the mixture to obtain the onion flavour composition.

The present invention thus also provides novel methods for producing novel, particularly advantageous onion flavour compositions.

Preferably, the term "onion" as used herein, unless indicated otherwise, refers to onion bulb.

Preferably, the term "fresh onion" as used herein refers to non-dehydrated whole onion or to non-dehydrated pieces of onion.

Preferably, the term "dehydrated onion" as used herein refers to the material obtained after dehydrating fresh onion, especially after dehydrating chopped or pureed fresh onion.

Preferably, the term "onion juice" as used herein refers to the liquid that is obtained by pressing onions.

Preferably, the term "onion juice concentrate" as used herein refers to onion juice from which at least a part of the water has been removed, e.g. by evaporation or reverse osmosis.

Preferably, the term "onion pomace" as used herein refers to the solid residue that remains after pressing onions for juice.

The Brix degree relates to the density of e.g. the onion juice concentrate, wherein the density corresponds to the density of a solution of saccharose in water which contains as many grams of saccharose per 100 g solution, as is the indication of Brix degree. An onion juice concentrate has for example 1 Brix degree if it has the same density as a solution of 1 g saccharose in 100 g saccharose/water solution. 10 Brix thus correspond to a density of 10 g saccharose in 100 g saccharose/water solution.

In a preferred embodiment of the above described method for producing an onion flavour composition according to the invention, the onion mix is dried in step v) by means of a vacuum belt or tray dryer, a drum dryer or a spray dryer.

Preferably, the onion mix is dried in step v) at a temperature of 120 °C or more, preferably 125 °C or more, for 25 minutes or more, preferably for 30 min or more.

Preferably, the water contents are measured by Karl Fischer Titration.

The onion pomace is obtained after pressing onions. Typically and preferably, the onion pomace has a water content of 60 wt.-% or higher, particularly preferably a water content of 65 to 80 wt.-%, especially preferably of 70 to 75 wt.-%.

The drying process applied to the onion pomace is preferably performed by hot air drying. The onion pomace is preferably dried until a water content of 5 wt.-% or less, preferably 4 wt.-% or less, particularly preferably 3 wt.-% or less is achieved. The drying is preferably performed at a temperature of 120 °C or more, preferably 130 °C and for at least 200 min.

The drying process effects a stabilization of the onion pomace. Reducing the water content prevents or reduces the degradation of its contents. Due to the drying process, the dried onion pomace can be stored and a further processing step directly after obtaining the onion pomace is no longer compulsory.

In connection with the above described method for producing an onion flavour composition according to the invention, the onion mix is preferably dried in step v) at a reduced pressure of not more than 10 mbar.

The heating process in step iv) is preferably performed at 100 °C to 120 °C, preferably 105 °C to 115 °C for 270 to 400 min, preferably 300 to 360 min. In one embodiment of the method, the heating process is performed at 105 °C for 360 min to obtain a fried onion mix. Preferably, in this embodiment, vegetable oil is provided in step iii).

The fresh onion provided in step i), the onion juice concentrate provided in step ii) and where applicable the vegetable oil provided in step iii) can also be mixed after a heating process as described in step iv) is applied to each of the components separately.

Where applicable, the fresh onion provided in step i) can be mixed first with the onion juice concentrate provided in step ii) and subsequently with the vegetable oil provided in step iii) or vice versa. Furthermore, the fresh onion can also be added as last or all components are mixed simultaneously in step iv).

Preferably, 40 to 110 parts by weight, preferably 45 to 105 parts by weight, particularly preferably 40 to 60 parts by weight of fresh onions can be added to 105 to 125 parts by weight, preferably 110 to 120 parts by weight of the onion mix obtained in step iv). In one embodiment, the fresh onions can be dried separately (preferably under the same conditions) and be added to the dried onion mix obtained in step v). In this case, the parts by weight indications referring to the onion mix refer to the onion mix including the additional onions. It is however preferred that the fresh onions and the onion mix obtained in step iv) are dried together, as described above.

The vegetable oil can be obtained from vegetables such as rapeseed, onions, sunflower, corn, soya been or the like.

It is further preferred that the milling process in step viii) is performed by means of an impact mill. Preferably, after milling the average particle size is below 0.4 mm.

Another aspect of the present invention is directed to the use of an onion flavour composition according to the invention to impart and/or enhance an onion flavour, preferably of the type deep fried onion, in a preparation for nourishment or pleasure, or in a semi-finished product for the production of a preparation for nourishment or pleasure.

Preparations for nourishment or pleasure can be - but are not limited to - spreads, dressings, seasonings, bouillons, soups, sauces, frozen foods, confectionery, ice cream, side dishes, beverages (including drinks, tea) and food supplements that are ingested and assimilated to produce energy, stimulate growth and/or maintain life, and the manufacture of any of the foregoing.

Preparations for nourishment or pleasure can further include pet food or chewing gums.

Semi-finished products for the production of a preparation for nourishment or pleasure can be - but are not limited to - snack seasonings, for example selected from the group consisting snack seasonings applied to potato crisps, to extruded snacks for direct consumption (e.g. corn curls), to tortilla crisps, to nuts and/or to coated nuts.

A preparation for nourishment or pleasure or a semi-finished product for the production of a preparation for nourishment or pleasure does not necessarily need to be in particular form, but can also be in liquid form.

The present invention, preferred embodiments thereof and several aspects in connection therewith will be described below in the form of selected examples.

### Examples:

### Example 1: Onion flavour composition, type: roasted (reference example):

31.5 g of fresh onion is cut by a slicer. 88.47 g of onion juice concentrate (72 ° Brix) is provided.

The cut fresh onion and the onion juice concentrate are mixed to obtain the onion mix, which is heated at 115 °C for 300 min. After heating the roasted onion mix is obtained.

50 g of cut fresh onion are provided and added to 114 g of the roasted onion mix. The mixture is dried by vacuum belt drying for 30 min at 140 °C and a pressure of 8 mbar to obtain the dried onion mix.

76 g of onion pomace is provided. The onion pomace is dried by hot air drying for 200 min at 130 °C and 20 g of dried onion pomace is obtained.

90 g of the dried onion mix and 10 g of the dried onion pomace are mixed and milled by an impact mill to obtain the onion flavour composition.

The obtained onion flavour composition was analysed by means of a GC-MS and comprises the following ingredients:

| Substance | Concentrations by weight **[mg/kg]** |
|---|---|
| 2-Hexyl-5-Methyl-3(2H)-furanon | 1.63 |
| Methylpropyl disulphide | 0.60 |
| 3,4-Dimethyl-thiophene | 7.12 |
| Methylpropyl trisulfid | 0.78 |
| 2-Methyl-2-pentenal | 0.84 |
| Furfural | 1.25 |
| Cis-Methyl-1-propenyldisulfide, | 0.47 |
| 5-Methylfurfural | 1.89 |

### Example 2: Onion flavour composition, type: deep fried:

31.5 g of fresh onion is cut by a slicer. 90 g of onion juice concentrate (70 ° Brix) and 0.65 g of rapeseed oil are provided.

The cut fresh onion, the onion juice concentrate and the rapeseed oil are mixed to obtain the onion mix, which is heated at 105 °C for 360 min. After heating the fried onion mix is obtained.

The fried onion mix is dried by vacuum belt drying for **30** min at 140 °C and a pressure of 8 mbar to obtain approximately 70 g of dried onion mix.

38 g of onion pomace is provided. The onion pomace is dried by hot air drying for 200 min at 130 °C and 10 g of dried onion pomace is obtained.

70 g of the dried onion mix and 10 g of the dried onion pomace are mixed and milled by an impact mill to obtain the onion flavour composition.

The obtained onion flavour composition was analysed by means of a GC-MS and comprises the following ingredients:

| **Substance** | **Concentrations by weight [mg/kg]** |
|---|---|
| 2-Hexyl-5-Methyl-3(2H)-furanon | 2.74 |
| Methylpropyl disulphide | 0.24 |
| 3,4-Dimethyl-thiophene | 5.11 |
| Methylpropyl trisulfid | 0.68 |
| 2-Methyl-2-pentenal | 0.73 |
| Furfural | 0.51 |
| Cis-Methyl-1-propenyldisulfide, | 0.59 |
| 5-Methylfurfural | 0.52 |

### Example 3: Application examples

### Example 3.1: Onion cream soup (instant)

| **Ingredient** | **Amount [wt.-%]** |
|---|---|
| Instant starch Prejel 70 VA | 20 |
| Fat powder satro FP78 | 35 |
| Maltodextrin DE 18-20 | 28.8 |
| Stabilizer Hamulsion^{®} | 2 |
| skimmed milk powder | 2 |
| Onion flavour composition, Example 1 | 4 |
| Onion flavour composition, Example 2 | 1 |
| Salt | 5 |
| MSG | 2 |
| Caramel sugar syrup powder | 0.2 |
| Sum | 100 |

All ingredients are mixed homogeneously. 140 g are used for 1 l water and boiled for 1 min.

### Example 3.2: BBQ seasoning dry

| **Ingredient** | **Amount [wt.-%]** |
|---|---|
| Sunflower oil | 6 |
| Salt | 12.1 |
| Sugar brown | 12 |
| Sugar fine | 13.8 |
| Starch coflo 67 | 5.5 |
| Onion flavour composition, Example 2 | 6.4 |
| Garlic powder | 7.6 |
| Tomato powder | 10 |
| Yest extract Gistex XII | 9 |
| Caramel sugar syrup | 11.5 |
| Citric acid powder | 1 |
| Vinegar powder | 2.3 |
| Maltodextrin DE 18-20 | 2.8 |
| Sum | 100 |

All ingredients are mixed and used in an amount of 3-6 wt.-% on the application.

### Example 3.3: Sweet paprika BBQ seasoning

| **Ingredient** | **Amount [wt.-%]** |
|---|---|
| Sunflower oil | 1 |
| Salt | 9.4 |
| Sugar | 18.6 |
| Sugar brown | 16 |
| Paprika powder | 6.5 |
| Starch coflo 67 | 5.5 |
| Onion flavour composition, Example 1 | 5.3 |
| Tomato powder | 21 |
| Yest extract Gistex XII | 9 |
| Caramel sugar syrup | 5.4 |
| Vinegar powder | 2.3 |
| Sum | 100 |

All ingredients are mixed and used in an amount of 3-6 wt.-% on the application.

## Claims

1. Onion flavour composition, preferably in form of a powder, comprising
a) all substances selected from group A consisting of 2-Hexyl-5-methyl-3(2H)-furanone, Methylpropyl disulphide, Methylpropyl trisulphide, 3,4-Dimethylthio-phene and 2-Methyl-2-pentenal;
b) the substances selected from group B consisting of Furfural, Cis-Methyl-1-propenyl disulfide and 5-Methylfurfural;
wherein the ratio of the sum of the concentrations by weight of the substances of component a), related to the total composition, and the sum of the concentrations by weight of the substances from component b), related to the total composition, is higher than or equal to 2.5:1,
and wherein the sum of the concentrations by weight of the substances from component a), related to the total composition, is at least 5 mg/kg,
and wherein the sum of the concentrations by weight of the substances from component b), related to the total composition, is maximal 2 mg/kg.

2. Onion flavour composition according to claim 1, wherein the sum of the concentrations by weight of the substances from component a), related to the total composition, is at least 7.5 mg/kg, at least 8 mg/kg or at least 9 mg/kg.

3. Onion flavour composition according to any of the preceding claims, wherein the sum of the concentrations by weight of the substances from component b) related to the total composition, is maximal 1.75 mg/kg.

4. Onion flavour composition according to any of the preceding claims, wherein the ratio of the sum of the concentrations by weight of the substances from component a), related to the total composition, and the sum of the concentrations by weight of the substances from component b), related to the total composition, is at least 3 : 1.

5. Onion flavour composition according to any of the preceding claims prepared or producible by a method comprising the steps
i) providing fresh onion,
ii) providing onion juice concentrate having a Brix degree of 60 to 85, preferably a Brix degree of 65 to 80, particularly preferably a Brix degree of 70 to 75,
iii) optionally: providing vegetable oil,
iv) heating 100 parts by weight of the fresh onion and 100 to 450 parts by weight, preferably 150 to 400 parts by weight, particularly preferably 200 to 350 parts by weight, especially preferably 250 to 300 parts by weight of the onion juice concentrate and where applicable 1 to 3, preferably 1.5 to 2.5 parts by weight of the vegetable oil to produce an onion mix,
wherein the fresh onion, the onion juice concentrate and, where applicable, the vegetable oil are mixed to obtain an onion mix, preferably before heating,
v) drying the onion mix to a water content of 5 wt.-% or less, preferably 4 wt.-% or less, particularly preferably 3 wt.-% or less, based on the total weight of the onion,
vi) providing onion pomace,
vii) optionally: drying the onion pomace,
viii) mixing 70 to 100 parts by weight, preferably 70 to 95 parts by weight of the dried onion mix obtained in step v) with 7.5 to 30 parts by weight, preferably 8 to 25 parts by weight, particularly preferably 10 to 20 parts by weight of the onion pomace provided in step vi) or obtained in step vii) and milling the mixture to obtain the onion flavour composition.

6. Onion flavour composition according to claim 5, wherein 40 to 110 parts by weight, preferably 45 to 105 parts by weight of fresh onions are added to 60 to 80 parts by weight, preferably 65 to 75 parts by weight of the onion mix obtained in step iv).

7. Onion flavour composition according to claims 5 or 6, wherein the drying of the mixture in step v) is performed in a dryer, preferably a vacuum belt or tray dryer, a drum dryer or a spray dryer.

8. Use of an onion flavour composition according to any of the preceding claims to impart and/or enhance an onion flavour of the type deep fried onion, in a preparation for nourishment or pleasure, or in a semi-finished product for the production of a preparation for nourishment or pleasure.

## Patentansprüche

1. Zwiebelgeschmackszusammensetzung, vorzugsweise in Pulverform, umfassend
a) alle Substanzen ausgewählt aus Gruppe A, bestehend aus 2-Hexyl-5-methyl-3(2H)-furanon, Methylpropyldisulfid, Methylpropyltrisulfid, 3,4-Dimethylthiophen und 2-Methyl-2-pentenal;
b) die Substanzen ausgewählt aus Gruppe B, bestehend aus Furfural, Cis-Methyl-1-propenyldisulfid und 5-Methylfurfural;
wobei das Verhältnis der Summe der Gewichtskonzentrationen der Substanzen aus Komponente a), bezogen auf die gesamte Zusammensetzung, zu der Summe der Gewichtskonzentrationen der Substanzen aus Komponente b), bezogen auf die gesamte Zusammensetzung, größer als oder gleich 2,5 : 1 ist,
und wobei die Summe der Gewichtskonzentrationen der Substanzen aus Komponente a), bezogen auf die gesamte Zusammensetzung, mindestens 5 mg/kg beträgt,
und wobei die Summe der Gewichtskonzentrationen der Substanzen aus Komponente b), bezogen auf die gesamte Zusammensetzung, maximal 2 mg/kg beträgt.

2. Zwiebelgeschmackszusammensetzung gemäß Anspruch 1, wobei die Summe der Gewichtskonzentrationen der Substanzen aus Komponente a), bezogen auf die gesamte Zusammensetzung, mindestens 7,5 mg/kg, mindestens 8 mg/kg oder mindestens 9 mg/kg beträgt.

3. Zwiebelgeschmackszusammensetzung gemäß einem der vorhergehenden Ansprüche, wobei die Summe der Gewichtskonzentrationen der Substanzen aus Komponente b), bezogen auf die gesamte Zusammensetzung, maximal 1,75 mg/kg beträgt.

4. Zwiebelgeschmackszusammensetzung gemäß einem der vorhergehenden Ansprüche, wobei das Verhältnis der Summe der Gewichtskonzentrationen der Substanzen aus Komponente a), bezogen auf die gesamte Zusammensetzung, zu der Summe der Gewichtskonzentrationen der Substanzen aus Komponente b), bezogen auf die gesamte Zusammensetzung, mindestens 3 : 1 beträgt.

5. Zwiebelgeschmackszusammensetzung gemäß einem der vorhergehenden Ansprüche, hergestellt oder herstellbar durch ein Verfahren, das die folgenden Schritte umfasst:
i) Bereitstellen von frischer Zwiebel,
ii) Bereitstellen eines Zwiebelsaftkonzentrats mit einem Brix-Grad von 60 bis 85, vorzugsweise mit einem Brix-Grad von 65 bis 80, besonders bevorzugt mit einem Brix-Grad von 70 bis 75,
iii) optional: Bereitstellen von Pflanzenöl,
iv) Erhitzen von 100 Gewichtsteilen frischer Zwiebel und 100 bis 450 Gewichtsteilen, vorzugsweise 150 bis 400 Gewichtsteilen, besonders bevorzugt 200 bis 350 Gewichtsteilen, insbesondere bevorzugt 250 bis 300 Gewichtsteilen des Zwiebelsaftkonzentrats und gegebenenfalls 1 bis 3, vorzugsweise 1,5 bis 2,5 Gewichtsteilen des Pflanzenöls zur Herstellung einer Zwiebelmischung,
wobei die frische Zwiebel, das Zwiebelsaftkonzentrat und gegebenenfalls das Pflanzenöl gemischt werden, um eine Zwiebelmischung zu erhalten, vorzugsweise vor dem Erhitzen,
v) Trocknen der Zwiebelmischung bis zu einem Wassergehalt von 5 Gew.-% oder weniger, vorzugsweise 4 Gew.-% oder weniger, besonders bevorzugt 3 Gew.-% oder weniger, bezogen auf das Gesamtgewicht der Zwiebel,
vi) Bereitstellen von Zwiebeltrester,
vii) optional: Trocknen des Zwiebeltresters,
viii) Mischen von 70 bis 100 Gewichtsteilen, vorzugsweise 70 bis 95 Gewichtsteilen der in Schritt v) erhaltenen getrockneten Zwiebelmischung mit 7,5 bis 30 Gewichtsteilen, vorzugsweise 8 bis 25 Gewichtsteilen, besonders bevorzugt 10 bis 20 Gewichtsteilen des in Schritt vi) bereitgestellten oder in Schritt vii) erhaltenen Zwiebeltresters und Mahlen der Mischung um die Zwiebelgeschmackszusammensetzung zu erhalten.

6. Zwiebelgeschmackszusammensetzung gemäß Anspruch 5, wobei 40 bis 110 Gewichtsteile, vorzugsweise 45 bis 105 Gewichtsteile frischer Zwiebeln zu 60 bis 80 Gewichtsteilen, vorzugsweise 65 bis 75 Gewichtsteilen der in Schritt iv) erhaltenen Zwiebelmischung hinzugefügt werden.

7. Zwiebelgeschmackszusammensetzung gemäß Anspruch 5 oder 6, wobei das Trocknen der Mischung in Schritt v) in einem Trockner, vorzugsweise einem Vakuumband- oder Tabletttrockner, einem Trommeltrockner oder einem Sprühtrockner erfolgt.

8. Verwendung einer Zwiebelgeschmackszusammensetzung gemäß einem der vorhergehenden Ansprüche zur Verleihung und/oder Verstärkung eines Zwiebelgeschmacks vom Typ Röstzwiebel in einer Zubereitung zur Ernährung oder zum Genuss, oder in einem Halbfertigprodukt zur Herstellung einer Zubereitung zur Ernährung oder zum Genuss.

## Revendications

1. Composition aromatisante à l'oignon, de préférence sous forme d'une poudre, comprenant
a) toutes les substances choisies dans le groupe A constitué par la 2-hexyl-5-méthyl-3(2H)-furanone, le disulfure de méthylpropyle, le trisulfure de méthylpropyle, le 3,4-diméthylthiophène et le 2-méthyl-2-penténal;
b) les substances choisies dans le groupe B constitué par le furfural, le disulfure de cis-méthyl-1-propényle et le 5-méthylfurfural;
dans laquelle le rapport de la somme des concentrations en poids des substances du composant a), par rapport à la composition totale, et la somme des concentrations en poids des substances du composant b), par rapport à la composition totale, est supérieur ou égal à 2,5 : 1,
et dans laquelle la somme des concentrations en poids des substances du composant a), par rapport à la composition totale, est d'au moins 5 mg/kg,
et dans laquelle la somme des concentrations en poids des substances du composant b), par rapport à la composition totale, est de 2 mg/kg au maximum.

2. Composition aromatisante à l'oignon selon la revendication 1, dans laquelle la somme des concentrations en poids des substances du composant a), par rapport à la composition totale, est d'au moins 7,5 mg/kg, d'au moins 8 mg/kg ou d'au moins 9 mg/kg.

3. Composition aromatisante à l'oignon selon l'une quelconque des revendications précédentes, dans laquelle la somme des concentrations en poids des substances du composant b), par rapport à la composition totale, est de 1,75 mg/kg au maximum.

4. Composition aromatisante à l'oignon selon l'une quelconque des revendications précédentes, dans laquelle le rapport de la somme des concentrations en poids des substances du composant a), par rapport à la composition totale, et la somme des concentrations en poids des substances du composant b), par rapport à la composition totale, est d'au moins 3 : 1.

5. Composition aromatisante à l'oignon selon l'une quelconque des revendications précédentes, préparée ou apte à être produite par un procédé comprenant les étapes consistant à
i) fournir de l'oignon frais,
ii) fournir du concentré de jus d'oignon ayant un degré Brix compris entre 60 et 85, de préférence un degré Brix compris entre 65 et 80, de manière particulièrement préférée un degré Brix compris entre 70 et 75,
iii) en option: fournir de l'huile végétale,
iv) chauffer 100 parties en poids de l'oignon frais et 100 à 450 parties en poids, de préférence 150 à 400 parties en poids, de manière particulièrement préférée 200 à 350 parties en poids, en particulier de préférence 250 à 300 parties en poids du concentré de jus d'oignon et, le cas échéant, 1 à 3, de préférence 1,5 à 2,5 parties en poids de l'huile végétale afin de produire un mélange d'oignons,
dans lequel l'oignon frais, le concentré de jus d'oignon et, le cas échéant, l'huile végétale sont mélangés pour obtenir un mélange d'oignons, de préférence avant de chauffer,
v) sécher le mélange d'oignons de manière à obtenir une teneur en eau de 5 % en poids ou moins, de préférence de 4 % en poids ou moins, de manière particulièrement préférée de 3 % en poids ou moins, par rapport au poids total de l'oignon,
vi) fournir du marc d'oignon,
vii) en option: sécher le marc d'oignon,
viii) mélanger 70 à 100 parties en poids, de préférence 70 à 95 parties en poids du mélange d'oignons séché obtenu à l'étape v) avec 7,5 à 30 parties en poids, de préférence 8 à 25 parties en poids, de manière particulièrement préférée 10 à 20 parties en poids du marc d'oignon fourni à l'étape vi) ou obtenu à l'étape vii) et broyer le mélange pour obtenir la composition aromatisante à l'oignon.

6. Composition aromatisante à l'oignon selon la revendication 5, dans laquelle 40 à 110 parties en poids, de préférence 45 à 105 parties en poids, d'oignons frais sont ajoutés à 60 à 80 parties en poids, de préférence 65 à 75 parties en poids, du mélange d'oignons obtenu à l'étape iv).

7. Composition aromatisante à l'oignon selon les revendications 5 ou 6, dans laquelle le séchage du mélange à l'étape v) est effectué dans un séchoir, de préférence un séchoir à bande sous vide ou un séchoir à plateaux, un séchoir à tambour ou un séchoir par atomisation.

8. Utilisation d'une composition aromatisante à l'oignon selon l'une quelconque des revendications précédentes pour conférer et/ou intensifier un arôme d'oignon de type oignon frit, dans une préparation alimentaire ou de plaisir, ou dans un produit semi-fini destiné à la fabrication d'une préparation alimentaire ou de plaisir.
